# Europäisches Patentamt

## European Patent Office

## Office européen des brevets

(19)

(11) Publication number: **0 232 687**
**B1**

(12)

# EUROPEAN PATENT SPECIFICATION

(45) Date of publication of patent specification: **07.12.88**

(51) Int. Cl.⁴: **B 60 N 1/02**

(21) Application number: **86830385.0**

(22) Date of filing: **29.12.86**

(54) Adjustable seat for motor vehicles.

(30) Priority: **14.01.86 IT 5285486 u**

(43) Date of publication of application:
**19.08.87 Bulletin 87/34**

(45) Publication of the grant of the patent:
**07.12.88 Bulletin 88/49**

(84) Designated Contracting States:
**DE ES FR GB SE**

(56) References cited:
**EP-A-0 029 997**
**FR-A-1 460 071**
**FR-A-1 462 408**
**FR-A-2 078 927**
**GB-A- 884 266**
**US-A-2 555 804**
**US-A-2 583 349**
**US-A-3 295 889**
**US-A-3 356 413**

(73) Proprietor: **FIAT AUTO S.p.A.**
**Corso Giovanni Agnelli 200**
**I-10135 Torino (IT)**

(72) Inventor: **Rovero, Giuseppe**
**Corso Giovanni Agnelli 119**
**I-10134 Torino (IT)**
Inventor: **Stacchino, Giuseppe**
**Via Tiepolo 10**
**I-10024 Moncalieri (Torino) (IT)**

(74) Representative: **Bosotti, Luciano et al**
**c/o Jacobacci-Casetta & Perani S.p.A. Via Alfieri, 17**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to adjustable seats for motor vehicles and concerns particularly a seat comprising a cushion, a back rising from the rear area of the cushion, and support means which, during the adjustment movement of the seat in a longitudinal direction relative to the structure of the vehicle, impart predetermined paths of movement to the cushion and the back.

A seat of this type is described, for example in EP—A—205 409 by the same Applicant.

The present invention has for its object a design of adjustable seat of the aforesaid type, which is improved in terms of convenience and effectiveness of application and use.

The seat according to the invention is characterised in that the support means comprise, on at least one side of the seat, first and second swing arms each having a lower point of hinging to the structure of the vehicle and an upper point of hinging to the back of the seat, in that the distance between the two lower points of hinging of said swing arms to the structure of the vehicle is substantially equal to the distance between the two upper points of hinging of said swing arms to the back, so that, during the adjustment movement of the seat in the longitudinal direction relative to the structure of the vehicle, the arms pivot to keep the orientation of the back relative to the structure of the vehicle substantially constant, in that the length of the first arm is selectively variable so as to alter the orientation of the back relative to the structure of the vehicle.

According to the preferred embodiment, one of the arms (normally the second) has an intermediate zone of hinging to the rear area of the cushion aligned with the lower point of hinging to the structure of the vehicle on a straight line which, during the adjustment movement of the seat between its most rearward position and its most forward position, moves in a vertical direction. Accordingly, during such movement, the free length of the cushion is reduced and the cushion is subjected to a tilting movement which causes the raising of the rear area of the cushion.

The fact that the free length of the cushion varies in dependence on the position of the seat, being reduced when the seat is moved forwards (small drivers and passengers) and increased when the seat is moved back (tall drivers and passengers), makes it possible to avoid the thighs of tall drivers and passengers being supported over an inadequate section of their length and the development of the phenomenon referred to as "raised limb" for small drivers and passengers.

At the same time, the fact that the cushion is free to perform a tilting movement, raising the rear area of the cushion when the seat is moved forward and lowering this area when the seat is moved back, ensures an anatomically correct support of the lumbosacral region of the spinal column of the driver or the passagers in every position of adjustment.

The raising or lowering of the rear area of the seat also allows the vision point (that is, the ideal horizontal plane in which the eyes of the person occupying the seat are situated) to be kept at an approximately constant level for both tall and small users.

Further characteristics and advantages of the invention will be apparent from the following description, given purely by way of non-limiting example and with reference to the appended drawings, in which:

Figures 1 and 2 show diagrammatically, in side elevation, a seat according to the invention and two possible adjustment positions, and

Figure 3 shows, on an enlarged scale, the part of Figure 1 indicated by the arrow III.

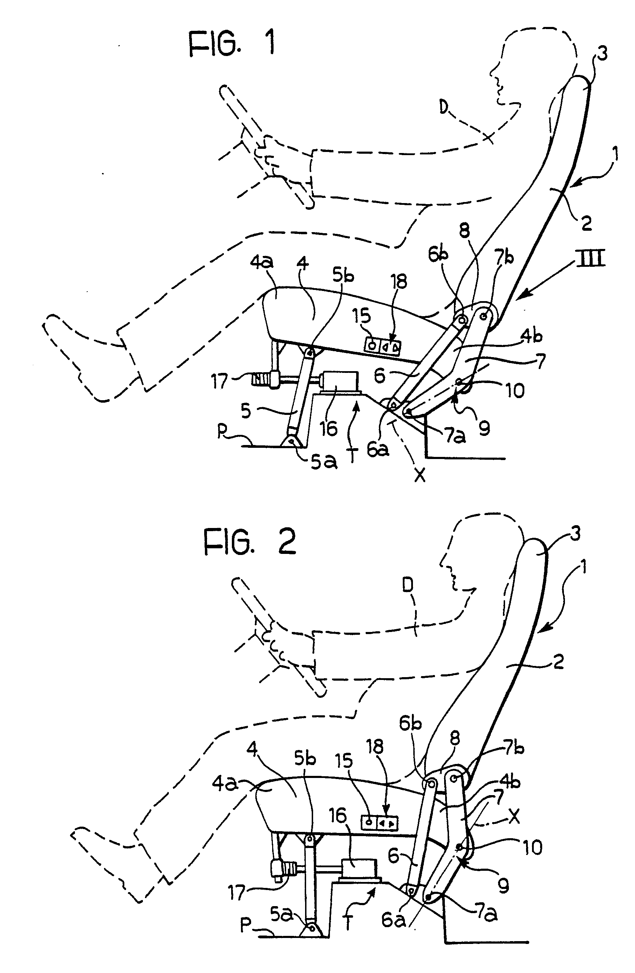

In particular, Figure 1 refers to the utlisation of the seat according to the invention by a tall driver or passenger, while Figure 2 refers to the use of the seat by a small driver or passenger.

In both Figures, the profile of the driver or passenger, shown by broken lines, is denoted by D.

In the Figures, an adjustable seat for motor vehicles, such as, for example, the seat intended to be occupied by the driver of a motor vehicle, is generally indicated 1.

Of this motor vehicle, which is not illustrated in its entirety, a portion of the floor P of the passenger compartment, provided with a rib (cross member) T in correspondence with the seat, is illustrated diagrammatically.

Distinguishable in the seat 1 are a back 2 provided at its upper end with a headrest 3, and a substantially horizontal member 4 which defines the sitting plane of the seat and which, in the present description and the claims which follow, has been termed a "cushion" for brevity.

The seat 1 according to the invention is an adjustable seat, that is, a seat to which an overall movement of longitudinal translation relative to the structure of the motor vehicle can be imparted for the purpose of adapting the position of the seat 1 to the anthropometric characteristics or to the driving and travelling habits of the drivers or passengers who occupy it.

In particular, the adjustment movement of the seat is effected between a most rearward position and a most forward position, which correspond substantially to the adjustment positions shown in Figures 1 and 2.

The seat 1 is supported on the floor P by an assembly of supporting swing arms.

The swing arms disposed on one of the sides of the seat can be seen in Figure 1. A similar arrangement of arms is provided on the other side. According to a widely known solution, at least some of the equivalent arms on the two sides of the seat are joined together by transverse stiffening members which extend below the cushion 3 in a general forked configuration.

A swing arm, indicated 5, is hinged to the front of the cross member T which supports the front portion, indicated 4a, of the cushion 4.

Generally, in the front arm 5, there can be distinguished a lower end 5a defining a lower point of hinging to the structure of the vehicle, and an upper end 5b defining an upper point of hinging to the cushion.

According to an entirely similar configuration of assembly, two other swing arms, indicated 6 and 7 respectively, support the seat in correspondence with its rear area, or in correspondence with the rear area 4b of the cushion 4 from which the back 2 rises.

Each of the two arms 6 and 7 have a lower end defining a point 6a, 7a of hinging to the structure of the motor vehicle. The lower hinging points 6a, 7a are at the rear of the cross member T, that is on the opposite side from that to which the lower end 5a of the front arm 5 is hinged.

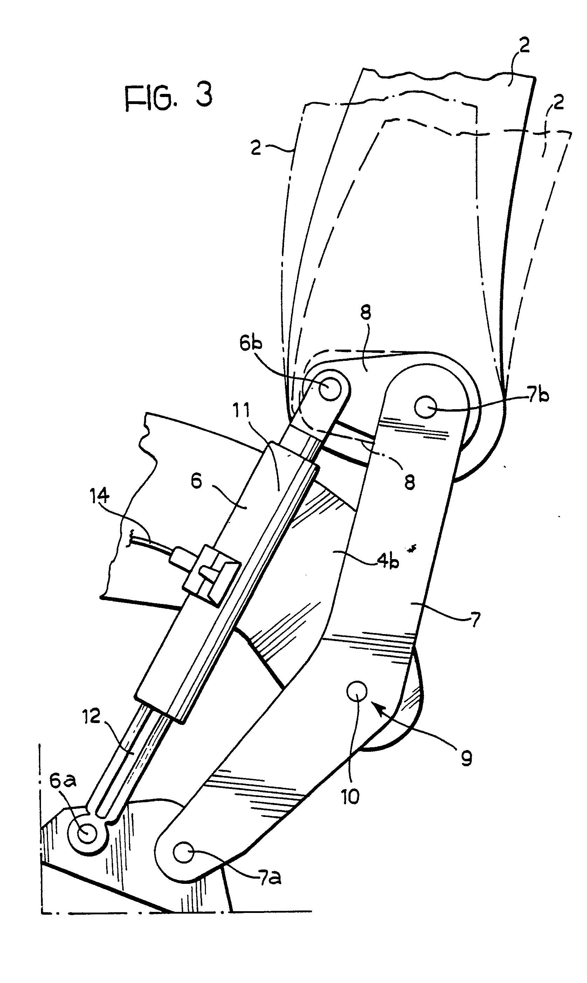

The upper ends of the arms 6 and 7 define two upper hinging points 6b, 7b in correspondence with which the arms 6, 7 are joined to the back 2. More precisely, as better seen in Figure 3, the upper ends 6b and 7b of the arms 6 and 7 are hinged to a plate 8 which is fixed rigidly to one of the sides of the back 3 so as to constitute, in fact, a part of the back 2. For this reason, in the following claims, the upper points of hinging 6b, 7b of the arms 6 and 7 have been described in short as "upper points of hinging to the back".

As can be seen, the arm 6 is in a forward position relative to the arm 7 which has an intermediate zone 9 through which passes a pin or shaft 10 supporting the cushion 4 in correspondence with its rear area 4b.

The intermediate area of support of the cushion 9 is therefore in an approximately central position between the points 7a and 7b in correspondence with which the arm 7 is hinged respectively to the floor P and the back 2 (or, more accurately, to the plate 8 fixed in turn to the back 2).

The front arm 6 is constituted by a rod whose length is selectively variable.

In the embodiment preferred at present, the arm 6 is constituted by a locking element of the type currently known by the name "Porter", comprising two members 11 and 12 joined together telescopically.

By acting on a control device 13 through a flexible control cable 14, it is possible to place the two members 11 and 12, which are normally locked together axially, into a condition of free relative sliding, in which the overall length of the arm 6, that is the distance separating the hinging points 6a and 6b, can be selectively adjusted.

The flexible control cable 14 may be actuated by the person occupying the seat by the pressing of a push-button 15 situated on one of the sides of the cushion 4 of the seat 1.

The upper points 6b and 7b at which the arms 6 and 7 are hinged to the structure of the back 2 are separated by a distance substantially identical to the distance separating the points 6a, 7a at which the arms 6 and 7 are hinged to the floor P of the motor vehicle.

One is thus considering a mounting arrangement of articulated parallelogram or quadrilateral type, such that the orientation of the plate 8, and hence of the back 2, remains unaltered relative to the structure of the vehicle when the arms 6 and 7 are pivoted about their lower hinging points 6a and 7a.

An electric motor, indicated 16, is mounted on the cross member T below the cushion 4 and acts through a worm screw transmission 17 on the cushion 4 in such a manner as to control the displacement thereof in a longitudinal direction relative to the structure of the vehicle. The motor 16 may be operated selectively in two senses by the person occupying the seat, who acts on pushbuttons 18 situated adjacent the push-button 15. It is stressed, moreover, that the use of a motor to control the longitudinal displacement of the seat constitutes a preferred, but not imperative, solution. According to a possible alternative embodiment, not shown, instead of the motor 16, it is possible to fit locking elements of "Porter" type similar to those constituting the arms 6, which enable the person occupying the seat to lock the seat in a selectively determined adjustment position.

Two distinct adjustment actions can be performed with the seat according to the invention.

The first is that which permits movement of the seat 1 longitudinally relative to the structure of the vehicle to bring it to any position between most rearward position of Figure 1 and the most forward position of Figure 2.

Such a movement of longitudinal adjustment is effected by the swinging of the arms 5, 6 and 7 about their lower points 5a, 6a and 7a of hinging to the floor of the passenger compartment of the motor vehicle.

The lower hinging point 5a of the arm 5 is selected in such a manner that, during the translational movement (in both directions), the arm 5 is held substantially vertical and the upper end 5b of the front arm 5 describes a slightly curved, substantially horizontal path, with its concavity facing downwards. Consequently, the front portion 4a of the cushion 4 remains at an approximately constant height relative to the floor P of the passenger compartment.

On the other hand, the rear portion 4b, which is supported by the arm 7 in correspondence with its central zone 9, is raised and lowered during the translational movement, moving away from and towards the floor P.

This result occurs because the central zone 9 (that is, the pin 10) is aligned with the lower hinging point 7a on a straight line (indicated X in the drawings) which, in the most rearward position, is inclined at an angle of about 60° to the vertical. During the forward movement of the seat, the straight line X rotates about the lower hinging point 7a to come closer to the vertical.

At the same time, the fact that the cushion 4 is connected to the rear arm 7 in a central position between the lower hinging point 7a and the upper hinging point 7b means that, during the movement, the cushion 4 and the back 2 follow two paths of different amplitude. In particular, the amplitude (observed longitudinally with respect to the vehicle) of the path of movement followed by the cushion 4 is a fraction (for example, about a half) of the amplitude of the path followed simultaneously by the back 2.

Accordingly, during the forward translational movement the cushion 4 undergoes a reduction of the useful length of its upper surface, in addition to being subjected to a tilting movement with the raising of the rear area 4b.

The back 2 moves forward, maintaining practically the same orientation relative to the structure of the motor vehicle. In fact, the articulated quadrilateral, of which the arms 6 and 7 constitute the longer sides, acts in such a manner as to keep the orientation of the plate 8 fixed to the back 2 substantially unchanged.

On the other hand, when the seat 1 is moved back, that is towards the most rearward position, the cushion 4 tilts backwards and its rear area 4b is lowered back towards the floor P, with a simultaneous lengthening of the useful length of the upper surface of the cushion 4.

As described in the introduction of the present specification, these combined movements mean that, in any position of adjustment, the seat 1 retains an anatomically correct attitude with regard to both the supporting of the thighs of the lumbosacral region of the person occupying the seat, and the maintenance of a substantially constant point of vision.

The second adjustment action is effected, on the other hand, by acting on the push-button 15 which actuates the flexible control cable 14 so as to put the two parts 11 and 12 of the telescopic arm 6 into a condition of free relative sliding. Under such conditions, the plate 8 and hence the back 2 are free to pivot.

With the back 2 free to pivot (naturally under the control of return springs—not illustrated—which bias the back 2 forwardly and prevent it from moving back violently) the person occupying the seat can easily adjust the orientation of the back 2 itself, adapting it precisely to his or her requirements and driving or travelling tastes and habits, as shown digrammatically in broken and chain lines in Figure 3. The desired orientation having been obtained, the push-button 15 can be released to cause the members 11 and 12 constituting the arm 6 of adjustable length to return to a position of relative locking and ensure the rigid support of the back 2.

Naturally, the scope of the present invention also extends to the models which achieve the same utility using the same innovative concept, and in particular to seats in which—as indicated above—the motor 16 controlling the longitudinal translation of the seat is replaced (according to a simplified constructional solution) by a manually-actuated mechanical control.

## Claims

1. An adjustable seat for motor vehicles, comprising a cushion (4), a back (2) rising from the rear area (4b) of the cushion (4), and support means (5, 6, 7) which, during the adjustment movement of the seat (1) in a longitudinal direction relative to the structure of the vehicle (P), impart predetermined paths of movement to the cushion (4) and the back (2), characterised in that the support means comprise, on at least one side of the seat (1), first (6) and second (7) swing arms each having a lower point (6a, 7a) of hinging to the structure of the vehicle (P) and an upper point (6b, 7b) of hinging to the back (2, 8) of the seat (1), in that the distance between the two lower points (6a, 7a) of hinging of said swing arms (6, 7) to the structure of the vehicle (P) is substantially equal to the distance between the two upper points (6b, 7b) of hinging of said swing arms (6, 7) to the back (2, 8), so that, during in adjustment movement of the seat (1) in the longitudinal direction relative to the structure of the vehicle (P), the arms (6, 7) pivot to keep the orientation of the back (2) relative to the structure of the vehicle (P) substantially constant, and in that the length of the first arm (6) is selectively variable (13—15) so as to alter the orientation of the back (2) relative to the structure of the vehicle (P).

2. A seat according to Claim 1, characterised in that a plate (8) fixed to the respective side of the back (2) is associated with the swing arms (6, 7), and in that the two swing arms (6, 7) are hinged to the plate (8) in correspondence with the upper hinging points (6b, 7b).

3. A seat according to Claim 1 or Claim 2, characterised in that one (7) of the two swing arms (6, 7) has an intermediate zone (9, 10) of hinging to the rear area (4b) of the cushion (4) of the seat (1), so that, during an adjustment movement of the seat (1) in the longitudinal direction relative to the structure of the vehicle (P), the cushion (4) describes a path whose amplitude is a fraction of the amplitude of the path followed by the back (2).

4. A seat according to Claim 3, movable in a longitudinal direction with respect to the structure of the vehicle (P) between a most rearward position and a most forward position, characterised in that the intermediate zone (9) and the lower hinging point (7a) of said one (7) of the swing arms (6, 7) are aligned on a straight line (X) which, during the adjustment movement of the seat (1) between the most rearward position and the most forward position, pivots about the lower point (7a) to move closer to the vertical, whereby the cushion (4) is subject to a tilting movement which causes the raising of the rear area (4b) of the cushion (4).

5. A seat according to any one of Claims 1 to 4, characterised in that the first swing arm (6) is disposed forwardly of the second swing arm (7).

6. A seat according to Claim 1 or Claim 5, characterised in that the first swing arm (6) is substantially constituted by a rod (11, 12) with a telescopic structure comprising two members (11, 12) selectively movable between a position of relative axial locking and a position of relative axial sliding.

7. A seat according to any one of Claims 1 to 6, characterised in that a motor (16) selectively actuable to effect the adjustment movement of one seat (1) in a longitudinal direction with respect to the structure of the vehicle (P) is associated with the cushion (4) of the seat (1).

**Patentansprüche**

1. Einstellbarer Sitz für Motorfahrzeuge, umfassend einen Sitzteil (4), eine vom rückwärtigen Bereich (4b) des Sitzteils (4) nach oben ragende Rückenlehne (2), und Stützmittel (5, 6, 7), welche bei der Einstellbewegung des Sitzes (1) in Längsrichtung relativ zur Fahrzeugstruktur (P) dem Sitzteil (4) und der Rückenlehne (2) vorgegebene Verstellwege aufzwingen, dadurch gekennzeichnet, daß die Stützmittel wenigstens auf einer Seite des Sitzes (1) angeordnete erste (6) und zweite (7) Schwingarme umfassen, deren jeder einen unteren Anlenkpunkt (6a, 7a) zum Anlenken an die Fahrzeugstruktur (P) und einen oberen Anlenkpunkt (6b, 7b) zum Anlenken an die Rückenlehne (2, 8) des Sitzes haben, daß der Abstand zwischen den beiden unteren Anlenkpunkten (6a, 7a) der Schwenkarme (6, 7) für die Fahrzeugstruktur (P) im wesentlichen gleich dem Abstand zwischen den beiden oberen Anlenkpunkten (6b, 7b) der Schwingarme (6, 7) für die Rückenlehne (2, 8) ist, so daß bei der Einstellbewegung des Sitzes (1) in Längsrichtung relativ zur Fahrzeugstruktur (P) die Schwingarme (6, 7) bei im wesentlichen gleichbleibender Orientierung der Rückenlehne (2) relativ zur Fahrzeugstruktur schwenken, und daß die Länge des ersten Schwingarmes (6) wahlweise variiert werden kann (13—15), so daß die Orientierung der Rückenlehne (2) relativ zur Fahrzeugstruktur (P) veränderbar ist.

2. Sitz nach Anspruch 1, dadurch gekennzeichnet, daß mit den Schwingarmen (6, 7) jeweils eine an der jeweiligen Seite der Rückenlehne (2) befestigte Platte (8) verbunden ist, und daß die beiden Schwingarme (6, 7) an der Platte (8) entsprechend den oberen Anlenkpunkten (6b, 7b) angelenkt sind.

3. Sitz nach Anspruch 1 oder 2, dadurch gekennzeichnet, daß einer (7) der beiden Schwingarme (6, 7) mit einer Mittelzone (9, 10) an dem rückwärtigen Bereich (4b) des Sitzteils (4) des Sitzes (1) angelenkt ist, so daß bei einer Einstellbewegung des Sitzes (1) in Längsrichtung relativ zur Fahrzeugstruktur (P) der Sitzteil (4) einen Weg beschreibt, dessen Amplitude einen Bruchteil der Amplitude des von der Rückenlehne (2) beschriebenen Weges ist.

4. Sitz nach Anspruch 3, welcher in Längsrichtung mit Bezug auf die Fahrzeugstruktur (P) zwischen einer hinteren Position und einer vorderen Position verstellbar ist, dadurch gekennzeichnet, daß die Mittelzone (9) und der untere Anlenkpunkt (7a) des einen (7) der Schwingarme (6, 7) auf einer Geraden (X) liegen, die bei der Einstellbewegung des Sitzes (1) zwischen der hinteren Position und der vorderen Position um den unteren Anlenkpunkt (7a) in eine der Vertikalen nähere Position schwenkt, wodurch der Sitzteil (4) einer Kippbewegung unterworfen wird, durch die der rückwärtige Bereich (4b) des Sitzteils (4) angehoben wird.

5. Sitz nach einem der Ansprüche 1 bis 4, dadurch gekennzeichnet, daß der erste Schwingarm (6) vor dem zweiten Schwingarm (7) angeordnet ist.

6. Sitz nach Anspruch 1, oder Anspruch 5, dadurch gekennzeichnet, daß der erste Schwingarm (6) im wesentlichen durch eine Strebe (11, 12) mit teleskopischem Aufbau gebildet ist, welche zwei wahlweise zwischen einer Stellung für eine gegenseitige axiale Blockierung und einer Stellung für eine gegenseitige axiale Verschiebung einstellbare Teile (11, 12) umfaßt.

7. Sitz nach einem der Ansprüche 1 bis 6, dadurch gekennzeichnet, daß mit dem Sitzteil (4) des Sitzes (1) ein Motor (16) verbunden ist, welcher wahlweise zur Druchführung der Einstellbewegung des Sitzes (1) in Längsrichtung bezüglich der Fahrzeugstruktur (P) aktivierbar ist.

**Revendications**

1. Siège réglable pour véhicule automobile, comprenant un coussin (4), un dossier (2) qui s'élève sur la région arrière (4b) du coussin (4), et des moyens de support (5, 6, 7) qui impriment des trajectoires prédéterminées au coussin (4) et au dossier (2) pendant le mouvement de réglage du siège (1) dans une direction longitudinale par rapport à la structure du véhicule (P), caractérisé en ce que les moyens de support comprennent sur au moins un côté du siège (1), des premier (6) et deuxième (7) bras oscillants dont chacun possède un point inférieur (6a, 7a) d'articulation sur la structure du véhicle (P) et un point supérieur (6b, 7b) d'articulation sur le dossier (2, 8) du siège (1), en ce que la distance entre les deux points inférieurs (6a, 7a) d'articulation desdits bras oscillants (6, 7) sur la structure du véhicule (P) est sensiblement égale à la distance entre les deux points supérieurs (6b, 7b) d'articulation desdits bras oscillants (6, 7) sur le dossier (2, 8), de sorte que, pendant le mouvement de réglage du siège (1) dans la direction longitudinale par rapport à la structure du véhicule (P), les bras (6, 7) pivotent de manière à maintenir sensiblement constante l'orientation du dossier (2) par rapport à la structure du véhicule (P) et en ce que la longueur du premier bras (6) est sélectivement variable (13—15) de manière à faire varier l'orientation du dossier (2) par rapport à la structure du véhicule (P).

2. Siège selon la revendication 1, caractérisé en ce qu'une plaque (8) fixée au côté correspondant du dossier (2) est associée aux bras oscillants (6, 7) et en ce que les deux bras oscillants (6, 7) sont articulés sur la plaque (8) au droit des points d'articulation supérieurs (6b, 7b).

3. Siège selon la revendication 1, ou la revendication 2, caractérisé en ce qu'un premier (7) des deux bras oscillants (6, 7) possède une zone intermédiaire (9, 10) d'articulation sur la région arrière (4b) du coussin (4) du siège (1), de sorte que, pendant un mouvement de réglage du siège (1) dans la direction longitudinale par rapport à la structure du véhicule (P), le coussin (4) décrit une trajectoire dont la longeur est une fraction de la longeur de la trajectoire parcourue par le dossier (2).

4. Siège selon la revendication 3, qui peut se déplacer dans la direction longitudinale par rapport à la structure du véhicule (P) entre une position extrême arrière et une position extrême avant, caractérisé en ce que la zone intermédiaire (9) et le point d'articulation inférieur (7a) dudit premier (7) des bras oscillants (6, 7) sont alignés sur une ligne droite (X) qui pivote autour du point inférieur (7a) pendant le mouvement de réglage du siège (1) entre la position extrême arrière et la position extrême avant, pour se rapprocher de la verticale, de sorte que le coussin (4) subit un mouvement de basculement qui provoque l'élévation de la région arrière (4) du coussin (4).

5. Siège selon l'une quelconque des revendications 1 à 4, caractérisé en ce que le premier bras oscillant (6) est disposé en avant du deuxième bras oscillant (7).

6. Siège selon la revendication 1 ou la revendication 5, caractérisé en ce que le premier bras oscillant (6), est essentiellement constitué par une biellette (11, 12) de structure télescopique, comprenant deux éléments (11, 12) que l'on peut sélectivement faire passer de l'une à l'autre de deux positions, une position de verrouillage axial relatif et d'une position de coulissement axial relatif.

7. Siège selon l'une quelconque des revendications 1 à 6, caractérisé en ce qu'un moteur (16), que l'on peut actionner sélectivement pour déterminer le mouvement de réglage du siège (1) dans la direction longitudinale par rapport à la structure du véhicule (P) est associé au coussin (4) du siège (1).

FIG. 1

FIG. 2

1

FIG. 3